# EUROPEAN PATENT APPLICATION

(11) **EP 1 880 602 A2**
(43) Date of publication of application: **23.01.2008**
(21) Application number: 07013861.5
(22) Date of filing: 16.07.2007
(51) Int. Cl.: A01K 1/015

(54) **Liquid-, moisture- and sound-absorbing product**

(30) Priority: 21.07.2006 IT MI20061430
(71) Applicant: B&B Trucioli S.r.l., 31020 S. Polo di Piave (TV) (IT)
(72) Inventor: Buora, Bruno, 33070 Caneva (Pordenone) (IT); Buora, Francesco, 31020 S. Polo di Piave (Treviso) (IT)
(74) Representative: Alagem Modiano, Lara S.

(57) **Abstract**

A liquid-, moisture- and sound-absorbing product being composed of a mixture of cellulose fibers and inert materials.

## Description

The present invention relates to a liquid-, moisture- and sound-absorbing product. More particularly, the invention relates to a product which is particularly suitable for litters for poultry, zootechnical, pig, sheep, goat and equine factory farming, i.e., for horses, dogs, sheep, goats and bovines and all pets.

As is known, products such as sawdust, which is a derivative of the waste from wood processing, are normally used for litters of pets.

Although sawdust is effective as a product for absorbing liquids and moisture, it has a substantially high cost, and moreover it can be obtained only from wood processing and as such is not available in unlimited quantities. Moreover, classic systems, based on sawdust and wood chips, or straw, corn cobs, rice hull, et cetera, due to their structure, which is not micronized, do not allow the use of broad-spectrum freeze-dried bacteria and therefore decomposition for disposal of such products currently is not fast.

The aim of the present invention is to provide a liquid-, moisture- and sound-absorbing product which can be used for pet litters.

Within this aim, an object of the present invention is to provide a liquid-, moisture- and sound-absorbing product which does not attract parasites and does not produce moulds, besides being completely harmless even if ingested.

Another object of the present invention is to provide a liquid-, moisture- and sound-absorbing product which is completely biodegradable, can be eliminated in small quantities even by means of domestic drains, does not form dust, does not have sharp edges and is not abrasive.

Another object of the present invention is to provide a liquid-, moisture- and sound-absorbing product which is not irritating and not harmful for human health.

Another object of the present invention is to provide a liquid-, moisture- and sound-absorbing product the decomposition whereof is much faster than that of products currently used for animal litters.

Still another object of the present invention is to provide a liquid-, moisture- and sound-absorbing product which is highly reliable, relatively simple to provide and at competitive costs.

This aim and these and other objects, which will become better apparent hereinafter, are achieved by a liquid-, moisture- and sound-absorbing product according to the invention, characterized in that it is composed of a mixture of cellulose fibers and inert materials.

Further characteristics and advantages of the invention will become better apparent from the description of preferred but not exclusive embodiments of the product according to the invention.

The product according to the invention, particularly suitable for use in pet litters, is provided by the combination of cellulose fiber, clays, calcium carbonate, in proportions which differ depending on the quality of the final product to be used, which then optionally receives the addition of natural or chemical products.

The fiber, particularly the short fiber of cellulose, is the waste which is produced by paper mills as a consequence of the production of paper and currently has to be disposed of and has no other specific uses.

Such short fibers are those fibers that during the paper manufacturing process are disposed of since they are unsuitable to manufacture paper. Accordingly, those short fibers do not derive from recycled paper but are just fibers that would be disposed of before the remaining, suitable fibers are processed to manufacture paper.

For this reason, cellulose fiber would be an extremely inexpensive component, besides facilitating the disposal of such cellulose fiber by paper mills absolutely rapidly, therefore converting a waste product into a useful product.

Conveniently, the product comprises 20 to 70% of cellulose fibers and 30 to 80% of inert materials, such as for example clays, talc and calcium carbonate.

The product, after mixing and drying, can have different forms, such as the aerated one, with different grammages and densities (such as cotton wool), in flakes, balls of different more or less regular sizes, cubes, tiles or briquettes, pellets (small cylinders of different shapes and sizes), panels of different sizes and thicknesses.

The product derived from the combination of cellulose fibers, clays, talc and calcium carbonate can receive the addition of "natural" products such as wood chips or sawdust, coconut fiber, peat, straws from rice, wheat, oats, barley, rye, and optionally other plants, cobs of corn, rice hull, vegetable residues of other plants, ears, et cetera.

Alternatively, the product can receive the addition of synthetic additives such as rubber, polystyrene, expanded clay and other existing products, or can receive the addition of freeze-dried broad-spectrum bacteria depending on the use for which it is intended.

The resulting product has the characteristics that follow. First of all it does not attract parasites and does not produce moulds; it is absolutely harmless even if ingested, entirely made of natural materials, biodegradable, can be eliminated in small quantities even through domestic drains, does not form dust, does not have sharp edges, is not abrasive, has a low relative density, a high liquid- and sound-absorbing power, and moreover is neither irritating nor harmful for human health.

The product can be mixed with other products in order to eliminate odors (for example a litter for animals), does not allow the proliferation of flies and larvae; in the presence of animal faeces, it accelerates the decomposition of the litter already during the farming cycle, obtaining a manure/litter in an advanced state of decomposition, which can be used promptly in agriculture as organic fertilizer.

Moreover, the decomposition of the product is much faster than classic systems based on sawdust and wood chips, straw, corn cobs, rice hull, which due to their non-micronized structure do not allow the use of freeze-dried broad-spectrum bacteria.

Upon activation of the litter by deposition of animal excrement, differently from other products, one obtains a habitat which is ideal both for the health of the animals and for the healthiness of the environments.

The product according to the invention is intended particularly, depending on the different type of processing, as a litter for poultry, zootechnical, pig, sheep, goat and equine factory farming, i.e., for horses, dogs, sheep, goats and bovines and all pets in general.

In its several forms, it can also be used as a sound-absorbing partition or structured into panels, in all the different forms, as a sound-absorbing material.

Therefore the product can be used also both in the agricultural field and in the field of building.

In practice it has been found that the product according to the invention fully achieves the intended aim and objects, since it allows to absorb liquids and moisture and can also be sound-absorbing, with absolutely natural components and with the optional addition of natural or chemical products.

The product thus conceived is susceptible of numerous modifications and variations, all of which are within the scope of the appended claims; all the details may further be replaced with other technically equivalent elements.

The disclosures in Italian Patent Application No. MI2006A001430 from which this application claims priority are incorporated herein by reference.

## Claims

1. A liquid-, moisture- and sound-absorbing product, **characterized in that** it is composed of a mixture of cellulose fibers and inert materials.

2. The product according to claim 1, **characterized in that** said inert materials comprise one or more clays, talc and calcium carbonate.

3. The product according to claim 1, **characterized in that** said cellulose fibers are present in an amount of 20-70% of the total weight of the product.

4. The product according to claim 1, **characterized in that** said cellulose fibers are present in an amount of 30-65% of the total weight of the product.

5. The product according to claim 1, **characterized in that** it receives the addition of natural or chemical products.

6. The product according to claim 5, **characterized in that** natural additives comprise wood chips or sawdust, coconut fiber, peat, straw from rice, wheat, barley, rye, cobs of corn, rice hull, vegetable seeds of plants, and ears.

7. The product according to one or more of the preceding claims, **characterized in that** said chemical additives are synthetic additives selected among rubber, polystyrene, and expanded clay.

8. The product according to one or more of the preceding claims, **characterized in that** it receives the addition of freeze-dried broad-spectrum bacteria.

9. The product according to one or more of the preceding claims, **characterized in that** it is in an aerated form.

10. The product according to one or more of the preceding claims, **characterized in that** it is provided in flakes, balls of different regular or irregular sizes, cubes, tiles or briquettes, pellets, panels of different sizes and thicknesses.

11. Use of a product according to one or more of claims 1 to 10 in the agricultural field.

12. Use of a product according to one or more of claims 1 to 10 as a litter for animals.

13. Use of a product according to one or more of claims 1 to 10 in the field of building.

14. Use of a product according to one or more of claims 1 to 10 as a sound-absorbing material.
